# EUROPÄISCHE PATENTANMELDUNG

(11) **EP 1 967 537 A1**
(43) Veröffentlichungstag der Anmeldung: **10.09.2008**
(21) Anmeldenummer: 08003619.7
(22) Anmeldetag: 28.02.2008
(51) Int. Cl.: C08G 18/10, C08G 18/42, C08G 18/66

(54) **Verfahren zur Herstellung von Formgedächtnisformkörpern mit einem breiten Einsatzbereich**

(30) Priorität: 08.03.2007 DE 102007011239
(71) Anmelder: Bayer MaterialScience AG, 51368 Leverkusen (DE)
(72) Erfinder: Bräuer, Wolfgang Dr., 51375 Leverkusen (DE); Wagner, Joachim Dr., 51061 Köln (DE); Meyer, Helmut Dr., 51519 Odenthal (DE)

(57) **Zusammenfassung**

Die vorliegende Erfindung betrifft ein Verfahren zur Herstellung von Formgedächtnisformkörpem mit einem breiten Temperatur-Einsatzbereich und deren Verwendung.

## Beschreibung

Die vorliegende Erfindung betrifft ein Verfahren zur Herstellung von Formgedächtnisformkörpern mit einem breiten Temperatur-Einsatzbereich und deren Verwendung.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU's, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU's werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 60 ShoreA bis 75 Shore D.

Die TPU's können kontinuierlich oder diskontinuierlich hergestellt werden. Die bekanntesten technischen Herstellverfahren sind das Bandverfahren (GB 1,057,018) und das Extruderverfahren (DE 1 964 834 und 2 059 570).

In EP-A 0 571 830 wird beispielsweise die Herstellung von thermoplastisch verarbeitbaren Polyurethan-Elastomeren mit einem verbesserten Verarbeitungsverhalten durch Weichsegmentvorverlängerung beschrieben. Es werden die bekannten Ausgangsverbindungen eingesetzt. Die so erhaltenen TPU haben eine verbesserte Standfestigkeit und eine verbesserte Entformbarkeit bei Spritzgussanwendungen.

Formgedächtnismaterialien sind ebenfalls allgemein bekannt. In dem Aufsatz "Formgedächtnispolymere" von A. Lendlein und S. Kelch, Angewandte Chemie , 2002, Seiten 2138-2162, Wiley-VCH-Verlag, werden neben anderen Polymeren auch Polyurethane beschrieben. Formgedächtnismaterialien sind demnach Werkstoffe , die unter Einwirkung eines äußeren Stimulus ihre äußere Form ändern können. Erfolgt die Verformung aufgrund einer Temperaturänderung , handelt es sich um einen thermisch induzierten Formgedächtniseffekt. Beim Einsatz von Formgedächtnispolymeren zur Herstellung dieser Werkstoffe benutzt man dazu einen physikalischen Phasenübergang , z.B. einen Schmelzpunkt einer Phase, in dem technisch erwünschten Temperaturbereich.

Die bei Lendlein beschriebenen Formgedächtnispolymere aus Polyurethanen werden aus zumeist technisch nicht oder nur aufwendig verfügbaren Komponenten zusammengesetzt oder sie zeigen andere Nachteile. So zeigen z.B. Polyurethane oft einen unerwünschten Perlmutteffekt oder sind zu hydrolyseempfindlich.

Die in DE-A 102 34 006 und DE-A 102 34 007 beschriebenen Formgedächtnispolymere zeigen einen Phasenübergang, der unter der Körpertemperatur liegt und sind daher für zahlreiche Anwendungen nicht geeignet. Zudem sind diese Polyurethane in dem technisch interessanten Elastomer-Modulbereich von 5 - 20 MPa deutlich in ihrem Temperaturanwendungsbereich eingeschränkt. Sie verlieren ihre Formstabilität schon bei 100 bis 120°C.

Aufgabe war es, Formgedächtnispolymere zur Verfügung zu stellen, die eine erhöhte Schalttemperatur aufweisen und gleichzeitig einen Temperatur -Einsatzbereich bis 180°C ermöglichen.

Diese Aufgabe konnte überraschenderweise durch ein Verfahren zur Herstellung von thermisch verarbeitbaren Polyurethanen gelöst werden.

Gegenstand der Erfindung ist ein Verfahren zur Herstellung von Formgedächtnisformkörpern auf Basis von thermoplastisch verarbeitbaren Polyurethanen mit einem Phasenübergangsbereich von 25 - 120°C, bevorzugt 35 - 70°C und einer Härtedifferenz gemessen bei einer Temperatur unterhalb und oberhalb der Phasenübergangstemperatur von > 15 ShoreA, die bei Temperaturen von über 120°C wärmestabil sind, welches dadurch gekennzeichnet ist, dass in einer mehrstufigen Umsetzung
a) ein oder mehrere lineare hydroxylterminierte Polyole mit Molekulargewichten von 2000 bis 4000 g/mol und einer Funktionalität von 2 mit einem Teil eines organischen Diisocyanates in einem molaren NCO : OH-Verhältnis von 1,1 : 1 bis 1,9 : 1 zu einem isocyanat-terminierten Prepolymer umgesetzt werden,
b) das in Stufe a) hergestellte Prepolymer mit der Restmenge des organischen Diisocyanates abgemischt wird,
c) das in Stufe b) hergestellte Gemisch mit einem oder mehreren Diol-Kettenverlängerem mit Molekulargewichten von 60 bis 350 g/mol zu einem thermoplastischen Polyurethan umgesetzt wird,
wobei nach der Stufe c) ein molares NCO : OH-Verhältnis von 0,9 : 1 bis 1,1 : 1 eingestellt wird und wobei das molare Verhältnis von Diol-Kettenverlängerer zu Polyol 3 : 1 bis 1 : 2 beträgt.

Als organische Diisocyanate kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl -2,6-cyclohexan-diisocyanat sowie die entsprechenden Isomerengemische, 4,4'- Dicyclohexylmethandiisocyanat, 2,4'- Dicyclohexylmethandiisocyanat und 2,2'-Dicyclohexylmethandiisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandüsocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-%, 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als Polyole werden lineare hydroxylterminierte Polyole eingesetzt. Produktionsbedingt enthalten diese oft kleine Mengen an nichtlinearen Verbindungen. Häufig spricht man daher auch von "im Wesentlichen linearen Polyolen".

Geeignete Polyole sind beispielsweise Polyetherdiole und Polyesterdiole.

Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein noch thermoplastisch verarbeitbares Produkt entsteht. Die im Wesentlichen linearen Polyetherdiole besitzen vorzugsweise zahlenmittlere Molekulargewichte M̅ₙ von 2000 bis 4000.

Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Besonders bevorzugt sind Butandioladipate.

Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren, wie ω-Hydroxycapronsäure oder Polymerisationsprodukte von Lactonen, z.B. gegebenenfalls substituierten ω-Caprolactonen.

Die Polyesterdiole besitzen erfindungsgemäß zahlenmittlere Molekulargewichte M̅ₙ von 2000 bis 4000.

Als Kettenverlängerungsmittel werden Diole, gegebenenfalls in Abmischung mit kleinen Mengen an Diaminen, mit einem Molekulargewicht von 60 bis 350 eingesetzt, vorzugsweise aliphatische Diole mit 2 bis 14 Kohlenstoffatomen, wie z.B. Ethandiol, 1,6-Hexandiol, Diethylenglykol, Dipropylenglykol, Ethylenglykol und insbesondere 1,4-Butandiol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A. Bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z. B. als Kettenabbrecher oder Entformungshilfen, zugesetzt werden. Beispielhaft genannt seien Alkohole, wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, dass das Äquivalenzverhältnis von NCO-Gruppen zur Summe der NCOreaktiven Gruppen 0,9 : 1,0 bis 1,1 : 1,0, vorzugsweise 0,95 : 1,0 bis 1,10 : 1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 1 Gew.-%, bezogen auf TPU.

Neben den TPU-Komponenten und den Katalysatoren können auch Hilfsmittel und/oder Zusatzstoffe zugesetzt werden. Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Bevorzugt können den TPU auch nanopartikuläre Feststoffe, wie z.B. Ruß in Mengen von 0 - 10 Gew.-% zugegeben werden. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch können andere Elastomere wie Kautschuk, Ethylen/Vinylacetatcopolymere, Styrol/Butadiencopolymere sowie andere TPU verwendet werden. Weiterhin zur Einarbeitung geeignet sind handelsübliche Weichmacher wie Phosphate, Phthalate, Adipate, Sebacate und Alkylsulfonsäureester.

Das TPU wird mehrstufig hergestellt.

Die Mengen an den Reaktionskomponenten zur Prepolymerbildung der Stufe a) werden so gewählt, dass das NCO/OH-Verhältnis von organischem Diisocyanat zu Polyol in Stufe a) 1,1 : 1 bis 1,9 : 1, bevorzugt 1,1 : 1 bis 1,7 : 1 beträgt.

Die Komponenten werden innig gemischt, und die Prepolymerreaktion der Stufe a) wird vorzugsweise im wesentlichen zum vollständigen Umsatz (bezogen auf die Polyolkomponente) gebracht.

Anschließend erfolgt die Einmischung der Restmenge an Diisocyanat (Stufe b).

Danach wird der Kettenverlängerer intensiv eingemischt und die Reaktion zu Ende geführt (Stufe c).

Das molare Verhältnis von Diol-Kettenverlängerer zu Polyol beträgt 3 : 1 bis 1 : 2. Das molare Verhältnis der NCO-Gruppen zu den OH-Gruppen insgesamt über alle Stufen wird auf 0,9 : 1 bis 1,1 : 1 eingestellt. Bevorzugt ist das molare Verhältnis von Diol-Kettenverlängerer zu Polyol kleiner als 2 : 1, wenn das Polyol ein Molekulargewicht von 2000 aufweist, und kleiner als 3 : 1, wenn das Polyol ein Molekulargewicht von 4000 aufweist.

Das TPU kann diskontinuierlich oder kontinuierlich hergestellt werden. Die bekanntesten technischen Herstellverfahren dafür sind das Bandverfahren (GB-A 1 057 018) und das Extruderverfahren (DE-A 1 964 834 , DE-A 2 059 570 und US-A 5 795 948).

Zur Herstellung der TPU eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder und Busskneter.

Das TPU kann z.B. auf einem Zweiwellenextruder dadurch hergestellt werden, dass man das Prepolymer im ersten Teil des Extruders herstellt und die Diisocyanatzugabe und die Kettenverlängerung im zweiten Teil anschließt. Dabei kann die Zugabe des Diisocyanates und des Kettenverlängerers parallel in die gleiche Dosieröffnung des Extruders oder bevorzugt nacheinander in zwei getrennten Öffnungen erfolgen. Erfindungsgemäß darf die Dosierung des Kettenverlängers allerdings nicht vor der Dosierung des weiteren Diisocyanates erfolgen.

Das Prepolymer kann aber auch außerhalb des Extruders in einem separaten, vorgeschalteten Prepolymerreaktor, diskontinuierlich in einem Kessel oder kontinuierlich in einem Rohr mit Statikmischern oder einem gerührten Rohr (Rohrmischer) hergestellt werden.

Ein in einem separaten Prepolymerreaktor hergestelltes Prepolymer kann aber auch mittels eines ersten Mischapparates, z.B. eines Statikmischers, mit dem Diisocyanat und mittels eines zweiten Mischapparates, z.B. eines Mischkopfes, mit dem Kettenverlängerer vermischt werden. Anschließend wird dieses Reaktionsgemisch analog dem bekannten Bandverfahren kontinuierlich auf einen Träger, bevorzugt ein Förderband, aufgebracht, wo man es bis zur Erstarrung des Materials ggf. unter Beheizung des Bandes zum TPU reagieren lässt.

Die durch das erfindungsgemäße Verfahren hergestellten TPU haben einen zusätzlichen Phasenübergang im Temperaturbereich von 25 bis 120°C. Oberhalb des Phasenüberganges ist aber noch ein breiter Anwendungsbereich bis etwa 180°C (Schmelztemperatur der Hartsegmente) für elastomere Eigenschaften verfügbar.

Nach einer thermoplastischen Verarbeitung zum Formkörper, bevorzugt einem Spritzgießkörper oder einem Extrusionskörper (wie z.B. Profile und Schläuche), weisen diese Formkörper Formgedächtniseigenschaften auf.

Die Formgedächtniseigenschaften können z.B. genutzt werden, indem man den Körper ausgehend von der permanenten Form bei einer Temperatur größer oder gleich der Schalttemperatur und kleiner der Schmelztemperatur der Hartsegmente streckt und in gestreckter Form auf eine Temperatur kleiner der Schalttemperatur abkühlt. Durch das Abkühlen wird das TPU in der gestreckten, temporären Form fixiert und geht erst bei Erwärmung oberhalb oder gleich der Schalttemperatur in die vorherige permanente Form über.

Die durch das erfindungsgemäße Verfahren hergestellten Formgedächtnisformkörper werden zur Herstellung von Spritzgießteilen, wie z.B. thermisch gesteuerte Aktoren oder thermisch gesteuert montierbare oder demontierbare Bauteile verwendet, z.B. Verschlusssysteme von Rohren und Behältern, Temperatursensoren, z.B. für Brandklappen und Rauchmelder, künstl. Muskeln, selbstzerlegende Befestigungselemente, wie Schrauben, Nieten etc., Dichtungen, Endkappen, Hülsen, Schlauch- und Rohrschellen, Sicherungsringe, Kupplungen, Durchführungen, Klemmscheiben, elastische Lager, Stopfen, lineare Antriebe, Verwandlungsspielsachen und Aktionsfiguren.

Auch Extrusionsartikel wie wärmeschrumpfende Filme, Folien und Fasern, Temperatursicherungen und -sensoren, Katheter, Implantate, kardiovaskuläre Stents, wärmeschrumpfender Knochenersatz, chirurgisches Nahtmaterial sind aus den Formgedächtnisformkörpern herstellbar.

Die Erfindung soll anhand der nachfolgenden Beispiele näher erläutert werden.

### Beispiele

### Herstellung der TPU:

In einem Reaktionsgefäß wurde gemäß Tabelle 1 jeweils ein Polyol vorgelegt. Nach dem Aufheizen auf 180°C wurde die Teilmenge 1 des 4,4'-Diphenylmethandiisocyanates (MDI) unter Rühren zugesetzt und die Prepolymerreaktion zu einem Umsatz von größer 90mol%, bezogen auf das Polyol gebracht.

Nach beendeter Reaktion wurde unter Rühren die Teilmenge 2 des MDI's zugeführt. Anschließend gab man die in der Tabelle 1 angegebene Menge Kettenverlängerer zu., wobei das NCO/OH-Verhältnis aller Komponenten bei 1,00 lag. Nach intensiver Durchmischung wurde das TPU-Reaktionsgemisch auf ein Blech ausgegossen und 30 Minuten bei 120°C getempert.

**Tabelle 1**

| **Beispiel** | **Polyol** | **Polyolmenge [Mol]** | **MDI Teilmenge 1 [Mol]** | **MDI Teilmenge 2 [Mol]** | **Kettenverlängerer** | **Kettenverlängerer [Mol]** |
|---|---|---|---|---|---|---|
| **1*** | 1 | 1 | 1,50 | 2,7 | 1 | 3,20 |
| **2** | 1 | 1 | 1,25 | 0,55 | 1 | 0,80 |
| **3** | 1 | 1 | 1,25 | 1,05 | 1 | 1,30 |
| **4** | 2 | 1 | 1,50 | 1,70 | 1 | 2,20 |
| **5** | 2 | 1 | 1,25 | 1,35 | 2 | 1,60 |

| | | | | | | |
|---|---|---|---|---|---|---|
| ***nicht erfindungsgemäßes Vergleichsbeispiel** | | | | | | |

Polyol 1 = Desmophen PE 225 B (von Bayer MaterialScience AG: Butandiol-adipat; Molgewicht 2200)
Polyol 2 = Desmophen PE 400 B (von Bayer MaterialScience AG: Butandiol-adipat; Molgewicht 4000)
Kettenverlängerer 1 = 1,4-Butandiol
Kettenverlängerer 2 = 1,4-Di(β-hydroxyethyl)-hydrochinon

Die Gießplatten wurden geschnitten und granuliert. Das Granulat wurde in einer Spritzgießmaschine D 60 (32-Schnecke) der Firma Mannesmann aufgeschmolzen und zu S1-Stäben (Formtemperatur: 40°C; Stabgröße:115x25/6x2) bzw. Platten (Formtemperatur: 40°C; Größe: 125x50x2 mm) geformt.

### Messungen

Die Messung der Härte erfolgte nach DIN 53505 bei Raumtemperatur und bei 60°C (Tabelle 2).

### Dynamisch mechanische Analyse (DMA nach ISO 6721.4: Speicher-Zug-E-Modul)

Aus den Spritzplatten wurden Rechtecke (30 mm x 10 mm x 2 mm) gestanzt. Diese Prüfplatten wurden unter konstanter Vorlast - gegebenenfalls vom Speichermodul abhängig - periodisch mit sehr kleinen Deformationen angeregt und die auf die Einspannung einwirkende Kraft als Funktion der Temperatur und Anregungsfrequenz gemessen.

Die zusätzlich aufgebrachte Vorlast diente dazu, im Zeitpunkt negativer Deformationsamplitude die Probe noch ausreichend gespannt zu halten.

Die DMA-Messungen wurden mit dem Seiko DMS Modell 6100 der Firma Seiko mit 1 HZ im Temperaturbereich von -150°C bis 200°C mit einer Heizrate von 2°C/min durchgeführt.

Zur Charakterisierung des Verhaltens der Formgedächtnisformkörper im Bereich des gewünschten Phasenüberganges (Schalttemperatur) wurde der Speicher-Zug-E-Modul bei 20°C und bei 60°C zum Vergleich gemessen und angegeben.

Die Schalttemperatur wurde als Wendepunkt des Phasenüberganges angegeben (Tabelle 2).

Als Maß für die Wärmestabilität wurde die Temperatur der DMA-Kurve angegeben, bei der die Modulkurve den Wert 2 MPa unterschreitet.

### Thermisch induzierte Verformung (TIV)

Ein Sl-Stab wurde bei 60°C (Temperatur größer als die Schalttemperatur) auf 100% gedehnt und unter Dehnung auf Raumtemperatur abgekühlt. Dadurch wird der Formkörper in der gestreckten temporären Form fixiert (Länge 1 in % der Ausgangslänge).

Durch ein erneutes Erhitzen oberhalb der Schalttemperatur wurde ein Schrumpf zurück in die permanente Form ausgelöst (Länge 2 in % der Ausgangslänge).

**Tabelle 2**

| **Bei spiel** | **Härte bei Raumtemp.** | **Härte bei 60°C** | **TIV Länge 1** | **TIV Länge 2** | **DMA E' (20°C)** | **DMA E' (60°C)** | **DMA T bei [2 MPa]** | **DMA Schalttemp.** |
|---|---|---|---|---|---|---|---|---|
| | **ShoreA** | **ShoreA** | **[%]** | **[%]** | **[MPa]** | **[MPa]** | **[°C]** | **[°C]** |
| **1*** | **89** | **86** | **130** | **106** | **67** | **48** | **176** | **keine** |
| **2** | **94** | **58** | **186** | **103** | **268** | **11** | **123** | **42** |
| **3** | **93** | **68** | **169** | **103** | **162** | **16** | **151** | **43** |
| **4** | **95** | **62** | **198** | **102** | **399** | **15** | **142** | **49** |
| **5** | **96** | **66** | | | **368** | **16** | **158** | **42** |

| | | | | | | | | |
|---|---|---|---|---|---|---|---|---|
| ***nicht erfindungsgemäßes Vergleichsbeispiel** | | | | | | | | |

Bei den erfindungsgemäßen Formgedächtnisformkörpern erkennt man in der DMA-Messung den durch das erfindungsgemäße Herstellverfahren erzeugten zusätzlichen Phasenübergang (siehe Schalttemperatur), der zu einer deutlichen Härte und Moduländerung führt. Für den technisch interessanten Modulbereich von 5 bis 30 MPA erhält man trotzdem einen breiten Temperatur-Anwendungsbereich bis 160°C, der durch die Temperatur bei 2 MPa charakterisiert ist.

Die Formgedächtniseigenschaften werden durch die Angaben der Längen bei der thermisch induzierten Verformung (TIV) verdeutlicht. Während beim Vergleichsbeispiel 1 durch das Fehlen der Sprungtemperatur kaum eine wärmeinduzierte Längenänderung erfolgt, wird bei den erfindungsgemäßen Beispielen 2 bis 5 eine deutliche Längenänderung ausgelöst.

## Patentansprüche

1. Verfahren zur Herstellung von Formgedächtnisformkörper auf Basis von thermoplastisch verarbeitbaren Polyurethanen mit einem Phasenübergangsbereich von 25 - 120°C, bevorzugt 35 - 70°C und einer Härtedifferenz gemessen bei einer Temperatur unterhalb und oberhalb der Phasenübergangstemperatur von > 15 ShoreA, die bei Temperaturen von ≥ 120°C wärmestabil sind, **dadurch gekennzeichnet, dass** in einer mehrstufigen Umsetzung
a) ein oder mehrere lineare hydroxylterminierte Polyole mit Molekulargewichten von 2000 bis 4000 g/mol und einer Funktionalität von 2 mit einem Teil eines organischen Diisocyanates in einem molaren NCO : OH-Verhältnis von 1,1 : 1 bis 1,9 : 1 zu einem isocyanat-terminierten Prepolymer umgesetzt werden,
b) das in Stufe a) hergestellte Prepolymer mit der Restmenge des organischen Diisocyanates abgemischt wird,
c) das in Stufe b) hergestellte Gemisch mit einem oder mehreren Diol-Kettenverlängerem mit Molekulargewichten von 60 bis 350 g/mol zu einem thermoplastischen Polyurethan umgesetzt wird,
wobei nach der Stufe c) ein molares NCO : OH-Verhältnis von 0,9 : 1 bis 1,1 : 1 eingestellt wird und wobei das molare Verhältnis von Diol-Kettenverlängerer zu Polyol 3 : 1 bis 1 : 2 beträgt.

2. Verfahren zur Herstellung von Formgedächtnisformkörper auf Basis von thermoplastisch verarbeitbaren Polyurethanen nach Anspruch 1, **dadurch gekennzeichnet, dass** das hydroxylterminierte Polyol ein Butylenadipat mit einem mittleren Molekulargewicht von 2000 bis 4000 g/mol ist.

3. Verfahren zur Herstellung von Formgedächtnisformkörper auf Basis von thermoplastisch verarbeitbaren Polyurethanen nach Anspruch 1, **dadurch gekennzeichnet, dass** das organische Diisocyanat aus der Gruppe 4,4'-Diphenylmethandiisocyanat, Isophorondiisocyanat, Dicyclohexylmethan-4,4-diisocyanat, Toluylen-2,4-diisocyanat, 1,6-Hexamethylendiisocyanat oder 1,5-Naphthylendiisocyanat ausgewählt wird.

4. Verfahren zur Herstellung von Formgedächtnisformkörper auf Basis von thermoplastisch verarbeitbaren Polyurethanen nach Anspruch 1, **dadurch gekennzeichnet, dass** der Diol-Kettenverlängerer aus der Gruppe bestehend aus Ethandiol, 1,4-Butandiol, 1,6-Hexandiol, 1,4-Di(β-hydroxyethyl)-hydrochinon und 1,4-Di(β-hydroxyethyl)-bisphenol A ausgewählt wird.

5. Verfahren zur Herstellung von Formgedächtnisformkörpet auf Basis von thermoplastisch verarbeitbaren Polyurethanen nach einem der Ansprüche 1 bis 4, **dadurch gekennzeichnet, dass** der Mischung während der Herstellung oder Verarbeitung 0 - 10 Gew.-% eines nanopartikulären Feststoffes zugesetzt werden.

6. Verfahren zur Herstellung von Formgedächtnisformkörper auf Basis von thermoplastisch verarbeitbaren Polyurethanen nach Anspruch 5, **dadurch gekennzeichnet, dass** es sich bei dem nanopartikulären Feststoff um Ruß handelt.

7. Verfahren zur Herstellung von Formgedächtnisformkörper auf Basis von thermoplastisch verarbeitbaren Polyurethanen nach Anspruch 1, **dadurch gekennzeichnet, dass** man die Formgedächtnisformkörper durch Spritzgießverarbeitung oder Extrusionsverarbeitung erhält.

8. Verwendung der gemäß den Ansprüchen 1 bis 7 erhaltenen Formgedächtnisformkörper auf Basis von thermoplastisch verarbeitbaren Polyurethanen zur Herstellung von Spritzgießartikeln und Extrusionsartikeln.
